# EUROPÄISCHE PATENTSCHRIFT

(11) **EP 4 233 161 B1**
(45) Veröffentlichungstag und Bekanntmachung des Hinweises auf die Patenterteilung: **02.09.2026**
(21) Anmeldenummer: 22773629.5
(22) Anmeldetag: 06.09.2022
(51) Int. Cl.: H02K 15/0421

(54) **VORRICHTUNG, MASCHINE UND VERFAHREN ZUR ERZEUGUNG EINER ENDKONFIGURATION VON LEITERSTÜCKEN**
DEVICE, MACHINE AND METHOD FOR PRODUCING A FINAL CONFIGURATION OF CONDUCTOR ELEMENTS
DISPOSITIF, MACHINE ET PROCÉDÉ DE FABRICATION D'UNE CONFIGURATION FINALE D'ÉLÉMENTS CONDUCTEURS

(30) Priorität: 14.10.2021 DE 102021126719
(43) Veröffentlichungstag der Anmeldung: 30.08.2023
(73) Patentinhaber: Gehring Technologies GmbH + Co. KG, 73760 Ostfildern (DE)
(72) Erfinder: HÜTTNER, Theodor, 73274 Notzingen (DE); SCHEEFF, Sebastian, 73728 Esslingen (DE)
(74) Vertreter: DREISS Patentanwälte PartG mbB
(86) Internationale Anmeldenummer: PCT/EP2022/074730
(87) Internationale Veröffentlichungsnummer: WO 2023/061664

(56) Entgegenhaltungen:
- JP-A- 2012 222 903
- JP-A- 2020 018 034
- US-A1- 2018 233 995
- US-A1- 2019 199 184

## Beschreibung

Die Erfindung betrifft eine Vorrichtung zur Erzeugung einer, insbesondere kreisförmigen, Endkonfiguration von Leiterstücken, vorzugsweise Hairpins, die insbesondere mit rechteckigem Leiterquerschnitt ausgebildet sind. Die Endkonfiguration der Hairpins ist dabei zur Bestückung eines Statorkerns vorgesehen. Jedes Leiterstück weist mindestens einen, insbesondere zwei, Schenkel auf. Die betreffende Vorrichtung weist Merkmale des Anspruchs 1 auf und eine ebenfalls erfindungsgemäße Maschine ist mit Merkmalen des Anspruchs 10 ausgebildet. Die Erfindung betrifft weiter ein Verfahren zur Erzeugung einer insbesondere kreisförmigen Endkonfiguration von Leiterstücken mit Merkmalen des Anspruchs 12.

Vorrichtungen und Verfahren zur Erzeugung einer Endkonfiguration von Leiterstücken zur Bestückung eines Statorkerns sind im Stand der Technik bekannt. Verwendung finden Statoren bspw. in elektrodynamischen Maschinen, z. B. in Elektromotoren. Bei der Fertigung von Elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden. Hierzu werden die einzelnen Leiterstücke bzw. Hairpins zu einer Endkonfiguration zusammengeführt und in den Statorkern eingesetzt, häufig im Statorkern noch verformt (twisting) und anschließend miteinander verschweißt, so dass die einzelnen Leiterstücke die Wicklungen des Stators bilden.

Ein Hairpin im vorliegenden Sinne ist ein Leiterstück mit zwei länglich erstreckten Schenkeln, die über einen Verbindungsabschnitt verbunden sind. Hairpins sind häufig im Wesentlichen U-förmig. Der Verbindungsabschnitt (auch Verbindungsschenkel genannt) kann bogenförmig aber auch abschnittsweise gerade oder stufenförmig ausgebildet sein. Ein Leiterstück kann, wie im Fall der eben beschriebenen Hairpins, zwei länglich erstreckte Schenkel aufweisen. Ein Leiterstück kann aber auch ein Sonderpin sein, der nur einen einzelnen länglich erstreckten Schenkel aufweist. Solche sogenannten Sonderpins werden meist zusätzlich zu Hairpins (Leiterstücke mit zwei Schenkeln) in den Statorkern eingesetzt. Solche Sonderpins (Leiterstücke mit einem Schenkel) weisen typischerweise eine länglich erstreckte Form auf.

US 2018 / 0 233 995 A1 und EP 2 874 289 A1 zeigen jeweils eine Vorrichtung zur Erzeugung einer Endkonfiguration von Leiterstücken. Beide Vorrichtungen sind jedoch sehr komplex aufgebaut. Änderungen einer Endkonfiguration von Leiterstücken in eine andere Endkonfiguration (z. B. mit einem anderen Durchmesser und/oder mit anderen Leiterstücken), lassen sich nur sehr eingeschränkt und nur durch umfangreiche Umbauten der jeweiligen Vorrichtungen realisieren. Ebenso ist die Zuführung von Sonderpins entweder nicht oder nur bedingt möglich.

JP 2012 222 903 A offenbart eine Vorrichtung mit Merkmalen des Anspruchs 1.

Die Aufgabe der vorliegenden Erfindung besteht darin, eine Möglichkeit zur Erzeugung einer insbesondere kreisförmigen Endkonfiguration von Leiterstücken, bereitzustellen, wobei die obigen Nachteile ausgeräumt werden und die Schaffung der Endkonfiguration insbesondere flexibel ist.

Diese Aufgabe wird durch eine Vorrichtung mit den Merkmalen des Anspruchs 1 gelöst. Die Vorrichtung umfasst:
Mindestens zwei Haltesegmenteinrichtungen, wobei jede Haltesegmenteinrichtung mindestens eine Haltesegmenteinheit aufweist. Jede Haltesegmenteinheit ist eingerichtet, um die Schenkel mehrerer Leiterstücke aufzunehmen und in einer vorgesehenen Ausrichtung zu halten und durch Bewegung der Haltesegmenteinheit in die Endkonfiguration zu überführen.

Dabei sind alle Schenkel eines in der Haltesegmenteinheit aufgenommenen Leiterstücks in der Haltesegmenteinheit aufgenommen. Bei einem Hairpin also beide vom Verbindungsabschnitt abgehenden länglichen Schenkel. Mit anderen Worten, jedes Leiterstück wird an allen seinen Schenkeln gehalten und bewegt. Die Vorrichtung ist insbesondere derart ausgebildet, dass die Orientierung bzw. Ausrichtung der Leiterstücke Während der Bewegung nicht verändert wird.

Die Haltesegmenteinheiten sind in einer Startposition in einem jeweiligen ersten radialen Abstand zu einem Mittelpunkt angeordnet. Mit einem radialen Abstand ist vorliegend der Abstand zwischen einer Haltesegmenteinheit und dem Mittelpunkt (also die kürzeste Strecke zwischen der Halteeinheit und dem Mittelpunkt) gemeint. Dabei wird der radiale Abstand von einem Punkt (auf) der Haltesegmenteinheit zu dem Mittelpunkt gemessen. Der Punkt von dem aus der Abstand zum Mittelpunkt gemessen wird kann z. B. der geometrische Schwerpunkt der Haltesegmenteinheit oder ein auf der Haltesegmenteinheit angeordneter und gegenüber dem Mittelpunkt am nächsten (oder am weitesten) liegender Punkt sein. Insbesondere wird der radiale Abstand bei allen Haltesegmenteinheiten ausgehend vom gleichen Punkt aus zum Mittelpunkt gemessen.

Die Haltesegmenteinheiten können in der Startposition (jeweils) unterschiedliche radialen Abstände zu dem Mittelpunkt aufweisen. Insbesondere können die Haltesegmenteinheiten auf einer ersten Kreisbahn (d. h. mit einem jeweils gleichen ersten radialen Abstand zum Mittelpunkt) um den Mittelpunkt angeordnet sein. Ebenso denkbar ist es, dass die Haltesegmenteinheiten jeweils in einem unterschiedlichen radialen Abstand zum Mittelpunkt angeordnet sein können.

Die Haltesegmenteinheiten sind in einer Endposition auf einer zweiten Kreisbahn um den Mittelpunkt angeordnet. Mit anderen Worten, die Haltesegmenteinheiten sind in der Endposition in einem jeweiligen zweiten radialen Abstand zu dem Mittelpunkt angeordnet, wobei der zweite radiale Abstand aller Haltesegmenteinheiten gleich groß ist. Die Haltesegmenteinheiten bilden einen Kreis um den Mittelpunkt.

Jede Haltesegmenteinheit ist entlang einer zumindest teilweise geradliegen Bewegungsbahn zwischen der Startposition und der Endposition in der Vorrichtung bewegbar ausgebildet. Die Vorrichtung ist derart ausgebildet, dass die in jeder Haltesegmenteinheit aufgenommenen Leiterstücke im Betrieb der Vorrichtung von der Startposition in die Endposition bewegt werden. Insbesondere kann die Vorrichtung derart ausgebildet sein, dass die in jeder Haltesegmenteinheit aufgenommenen Leiterstücke durch eine ausschließlich geradlinige translatorische Bewegung bewegt werden. Dies stellt einer besonders bevorzugte Variante dar, in der die Mechanik zur Umsetzung der Bewegung einfach ausgebildet sein kann und die Vorrichtung besonders zuverlässig arbeitet und konstruktiv einfach umzusetzen ist. Insbesondere werden alle Schenkel jedes aufgenommenen Leiterstücks geradgeführt bewegt.

Die Vorrichtung ist derart ausgebildet, dass die Bewegungsbahnen der Haltesegmenteinheiten tangential zu einer dritten Kreisbahn um den Mittelpunkt oder durch den Mittelpunkt verlaufen. Bei einer Vorrichtung mit mindestens drei Haltesegmenteinheiten werden die Haltesegmenteinheiten auf Bewegungsbahnen der Haltesegmenteinheiten tangential zu einer dritten Kreisbahn um den Mittelpunkt bewegt. Mit anderen Worten, die Bewegungsbahnen verlaufen nicht durch den Mittelpunkt. Bei einer Vorrichtung mit zwei Haltesegmenteinheiten werden die Haltesegmenteinheiten auf Bewegungsbahnen der Haltesegmenteinheiten durch den Mittelpunkt bewegt.

Insbesondere ist der Radius der ersten, zweiten und der dritten Kreisbahn (immer) größer Null.

Die Haltesegmenteinheiten können jeweils mit Hairpins und/oder Sonderpins bestückt werden. Verschiedene Endkonfigurationen der Leiterstücke können bspw. durch das Variieren der Bewegungsbahnen der Haltesegmenteinheiten und/oder Austausch von Haltesegmenteinheiten durch andere (anders konfigurierte bzw. anders ausgebildete) Haltesegmenteinheiten realisiert werden. Insbesondere lassen sich Endkonfigurationen der Leiterstücke mit unterschiedlichen Durchmessern realisieren.

Jede Haltesegmenteinrichtung kann ein erstes Führungselement und ein zweites Führungselement umfassen. Dabei kann die jeweilige Haltesegmenteinheit in der Startposition zwischen dem ersten Führungselement und dem zweiten Führungselement angeordnet sein. Das erste und das zweite Führungselement können derart eingerichtet sein, dass die Leiterstücke beim Bestücken der jeweiligen Haltesegmenteinheit in der Startposition zumindest teilweise durch die Führungselemente geführt sind. Mit anderen Worten, mittels des ersten und des zweiten Führungselements ist insbesondere ein geführtes Bestücken (Einführen der Schenkel der Leiterstücke in die Haltesegmenteinheit) der Haltesegmenteinheit möglich. Die Führungselemente bieten also eine Einführhilfe, um die Leiterstücke in ihre gewünschte Position einzusetzen. Bspw. können die Führungselemente eine Zentrierwirkung auf die gewünschte Position haben.

Das erste und das zweite Führungselement können die Haltesegmenteinheit während der Bestückung fixieren. Die Fixierung der Haltesegmenteinheit mittels des ersten und des zweiten Führungselements erlaubt insbesondere ein exaktes Einführen der Schenkel der Leiterstücke in die Haltesegmenteinheit (Bestücken). Das Fixieren kann insbesondere über ein klemmendes Halten der Haltesegmenteinheit zwischen dem ersten und dem zweiten Führungselement erfolgen.

Das zweite Führungselement kann auf der dem Mittelpunkt zugewandten Seite der Haltesegmenteinheit angeordnet sein. Das zweite Führungselement kann derart beweglich ausgebildet sein, insbesondere schwenkbar sein, dass es zwischen einer Bestückposition und einer Freigabeposition bewegbar ist.

Insbesondere kann das zweite Führungselement von der Haltesegmenteinheit wegbewegbar (insbesondere weg schwenkbar) eingerichtet sein. Dabei kann das zweite Führungselement in der Bestückposition die Haltesegmenteinheit fixieren. Das zweite Führungselement kann in der Bestückposition eine Führung für die zu bestückenden Leiterstücke bilden. In der Freigabeposition kann das zweite Führungselement derart angeordnet sein, dass eine Bewegung der Haltesegmenteinheit in ihre Endposition möglich ist.

Das zweite Führungselement kann einteilig oder mehrteilig ausgebildet sein. Es ist denkbar, dass bei einem mehrteiligen zweiten Führungselement, die einzelnen Teilelementen in unterschiedliche Richtungen bewegbar ausgebildet sein können. So kann bspw. bei einem zweiteilig ausgebildeten zweiten Führungselement ein erstes Teilelement um eine Schwenkachse und ein zweites Teilelement um eine zweite (von der ersten Schwenkachse verschiedene) Schwenkachse verschwenkbar ausgebildet sein.

Das erste Führungselement kann auf der dem Mittelpunkt abgewandten Seite der Haltesegmenteinheit angeordnet sein. Das erste Führungselement kann beweglich ausgebildet sein, insbesondere analog zum zweiten Führungselement. Das erste Führungselement kann fix angeordnet bzw. unbeweglich ausgebildet sein.

Insbesondere können das erste Führungselement, das zweite Führungselement und/oder die Haltesegmenteinheit eine bogenartige Form aufweisen. Jedenfalls kann die zur Kontaktierung der Haltesegmenteinheit ausgebildete Seite bogenförmig und komplementär zu der Haltesegmenteinheit ausgebildet sein.

Jede Haltesegmenteinrichtung kann mindestens eine Führungseinrichtung, insbesondere in Form einer Führungsschiene, zur geführten Bewegung der Haltesegmenteinheit entlang der Bewegungsbahn umfassen. Mit anderen Worten, jede Haltesegmenteinheit kann, insbesondere zwischen ihrer Startposition und ihrer Endposition, entlang der Bewegungsbahn mittels der Führungseinrichtung geführt bewegt werden.

Jede Haltesegmenteinheit kann mehrere Aufnahmen zur Aufnahme von Schenkeln, insbesondere Schenkelenden, eines Leiterstücks aufweisen. Insbesondere können alle Schenkel eines Leiterstücks in den Aufnahmen aufgenommen werden.

Die Haltesegmenteinheit kann kammartig ausgebildet sein. Jede Aufnahme kann dabei zwischen zwei benachbarten Kammzinken angeordnet sein. Insbesondere ist jede Aufnahme taschenartig ausgebildet. Insbesondere kann jede Aufnahme fünf (insbesondere eben ausgebildete) Wandungen aufweisen, die die jeweilige Aufnahme räumlich begrenzen. Dabei können jeweils zwei, insbesondere drei, benachbarte Wandungen derselben Aufnahme orthogonal zueinander angeordnet sind.

Die Kammzinken können in eine dem Kammrücken abgewandte Richtung (der Haltesegmenteinheit abgewandte Richtung) verjüngend ausgebildet sein bzw. einen sich verjüngenden Abschnitt aufweisen.

Jede Haltesegmenteinheit kann mindestens eine Führungskante aufweisen. Dabei kann die Führungskante eingerichtet sein, um während der Bestückung der Haltesegmenteinheit die in die Haltesegmenteinheit einzusetzenden (zu bestückenden) Leiterstücke zumindest teilweise zu führen und zu zentrieren. Die Führungskante kann insbesondere eine abgeschrägte Form, insbesondere in Richtung der Mitte zwischen zwei benachbarten Kammzinken, aufweisen. Die Führungskannte kann abgerundet ausgebildet sein. Ebenso denkbar ist es, dass die Führungskante scharfe Kanten aufweisen kann.

Die Führungskante kann eingerichtet sein, um nach der Bestückung der Haltesegmenteinheit mit Leiterstücken, die in die Haltesegmenteinheit eingesetzten Schenkeln der Leiterstücke, insbesondere klemmend, zu fixieren.

Insbesondere kann die Führungskante entlang eines Kammzinkens angeordnet sein. Mit anderen Worten, die Führungskante kann entlang, also in Längsrichtung, eines Kammzinkens verlaufen. Die Führungskante kann zwischen zwei benachbarten Kammzinken angeordnet sein.

Sind die Haltesegmenteinheiten mit den darin befindlichen Leiterstücken in die Endposition bewegt, so bilden die Leiterstücke die gewünschte Endkonfiguration. In der Endposition können die Haltesegmenteinheiten miteinander überlappend angeordnet sein. Hierzu kann jede Haltesegmenteinheit einen ersten Überlappungsbereich und einen zweiten Überlappungsbereich aufweisen. Die Haltesegmenteinheiten können in der Endkonfiguration derart angeordnet sein, dass der erste Überlappungsbereich einer ersten Haltesegmenteinheit mit dem zweiten Überlappungsbereich einer benachbarten zweiten Haltesegmenteinheit überlappt. Mit anderen Worten, die Überlappungsbereiche sind insbesondere in einer Radialrichtung aufeinanderfolgend angeordnet. Mit einer Radialrichtung ist eine vom Mittelpunkt ausgehende und vom Mittelpunkt weg zeigende Richtung gemeint.

Insbesondere überlappen die Haltesegmenteinheiten mit ihren ersten und zweiten Überlappungsbereichen derart, dass die Haltesegmenteinheiten schuppenartig entlang der zweiten Kreisbahn angeordnet sind.

Der erste Überlappungsbereich kann an einen ersten Absatz der Haltesegmenteinheit angrenzen. Alternativ oder zusätzlich kann der zweite Überlappungsbereich an einen zweiten Absatz der Haltesegmenteinheit angrenzen. Der erste und/oder der zweite Absatz können stufenförmig oder stufenlos (abgerundet) ineinander übergehend ausgebildet sein. Der erste Absatz kann an der dem Mittelpunkt zugewandten Seite der Haltesegmenteinheit angeordnet sein. Der zweite Absatz kann an der dem Mittelpunkt abgewandten Seite der Haltesegmenteinheit angeordnet sein.

Durch den ersten Absatz ist der erste Überlappungsbereich in Radialrichtung, also in Richtung vom Mittelpunkt weg, nach radial außen versetzt an der Haltesegmenteinheit angeordnet.

Durch den zweiten Absatz ist der zweite Überlappungsbereich entgegen der Radialrichtung, also in Richtung zum Mittelpunkt hin, nach radial innen versetzt an der Haltesegmenteinheit angeordnet.

Durch die beiden Absätze lassen sich mindestens zwei benachbarte, insbesondere alle, Haltesegmenteinheiten zusammensetzten. Die Haltesegmenteinheiten lassen sich insbesondere zu einem Kreis zusammensetzen.

Es ist denkbar, dass alle Haltesegmenteinheiten gleich ausgebildet sein können. Insbesondere kann der erste Überlappungsbereich komplementär zu dem zweiten Überlappungsbereich ausgebildet sein. Insbesondere kann der erste Überlappungsbereich einer Haltesegmenteinheit komplementär zu dem zweiten Überlappungsbereich einer benachbarten Haltesegmenteinheit ausgebildet sein.

Die Vorrichtung kann weiter einen ersten Drehtisch umfassen. Die Haltesegmenteinheiten können auf dem ersten Drehtisch angeordnet sein.

Die Haltesegmenteinheiten können mittels eines Kulissenantriebs bewegbar ausgebildet sein. Hierzu können die Haltesegmenteinheiten auf einer ersten, insbesondere (kreis-) runden, Basisscheibe angeordnet sein. Der Kulissenantrieb kann mehrere auf einer Kreisbahn angeordnete, gekrümmte Kulissenbahnen aufweisen. Die Kulissenbahnen können auf einem scheibenartigen Kulissenelement angeordnet sein. Das Kulissenelement kann in Schwerkraftrichtung nach der Basisscheibe angeordnet sein. Mit anderen Worten, das Kulissenelement kann unterhalb der Basisscheibe angeordnet sein. Jede Haltesegmenteinheit kann einen Fortsatz aufweisen. Die Fortsätze der Haltesegmenteinheiten können ausgebildet sein, um jeweils in eine entsprechende Kulissenbahn des Kulissenelements einzugreifen. Die Haltesegmenteinheiten können jeweils in einer Führungseinrichtung geführt sein. Die Führungseinreichung kann in Form einer geradlinig verlaufenden Nut oder einer Führungsschiene in der Basisscheibe ausgebildet sein.

Durch eine Drehung des Kulissenelements kann einerseits der Fortsatz des zu bewegenden Elements entlang der jeweiligen Kulissenbahn bewegt werden. Andererseits kann die jeweilige zu bewegende Haltesegmenteinheit durch die jeweilige Führungseinrichtung auf eine geradlinig verlaufende Bahn gedrängt werden. So kann eine rotatorische Bewegung (des Kulissenelements) in eine lineare Bewegung (der Haltesegmenteinheiten) transformiert werden.

Insbesondere ist der Kulissenantrieb derart ausgebildet und mit den Haltesegmenteinheiten derart gekoppelt, dass diese durch eine Rotation des Kulissenelements entlang ihrer jeweiligen Bewegungsbahn, insbesondere zwischen der Start- und Endposition, bewegt werden.

Die Basisscheibe und das Kulissenelement (bzw. der Kulissenantrieb) können als Bestandteil des ersten Drehtischen ausgebildet sein.

Die Vorrichtung kann mindestens eine fest angeordnete Sonderhaltesegmenteinheit aufweisen, die unbeweglich in der Endposition auf der zweiten Kreisbahn um den Mittelpunkt angeordnet ist. Die Sonderhaltesegmenteinheit kann analog zu den beweglichen, oben beschriebenen, Haltesegmenteinheiten ausgebildet sein, mit dem Unterschied, dass diese unbeweglich ausgebildet ist. Insbesondere ist die Sonderhaltesegmenteinheit zur Aufnahme von Sonderpins eingerichtet.

Weiter wird die zu lösende Aufgabe durch eine Maschine mit den Merkmalen des Anspruchs 10 gelöst, wobei die Maschine mindestens eine Vorrichtung gemäß obiger Ausführungen umfasst.

Hinsichtlich der mit der Maschine erzielbaren Vorteile wird auf die diesbezüglichen Ausführungen zur Vorrichtung verwiesen. Zur weiteren Ausgestaltung der Maschine können die im Zusammenhang mit der Vorrichtung beschriebenen Maßnahmen dienen.

Die Maschine umfasst mindestens eine Bestückeinrichtung zur Bestückung der Haltesegmenteinheiten der Vorrichtung in der Startposition mit Leiterstücken. Die Bestückeinrichtung kann insbesondere greiferbasiert ausgebildet sein.

Die Maschine kann mindestens zwei der eingangs beschriebenen Vorrichtungen umfassen. Dabei können die Vorrichtungen eingerichtet sein, um die in der jeweiligen Vorrichtung eingesetzten Leiterstücke jeweils in unterschiedliche Endkonfigurationen zu überführen.

Die unterschiedlichen Endkonfigurationen der Leiterstücke können einen unterschiedlichen Durchmesser aufweisen. Ebenso denkbar ist es, dass die unterschiedlichen Endkonfigurationen eine unterschiedliche Anzahl an Leiterstücken, eine unterschiedliche Art (Hairpins, Sonderpin) der Leiterstücke und/oder eine unterschiedliche Größe der Leiterstücke aufweisen.

Die mehreren Vorrichtungen der Maschine können auf einem zweiten Drehtisch angeordnet sein.

An dem zweiten Drehtisch können verschieden Stationen realisiert sein. So könnte die Bestückeinrichtung bspw. eine Bestückstation darstellen.

An der Bestückstation können die Haltesegmenteinheiten einer Vorrichtung mit Leiterstücken bestückt werden. Es ist denkbar, dass nach dem Bestücken einer Haltesegmenteinheit der erste Drehtisch, auf dem die Haltesegmenteinheiten angeordnet sein können, ein Stück weiterdreht wird, so dass eine nächste (unbestückte) Haltesegmenteinheit an die Bestückeinrichtung der Bestückstation herangefahren werden kann und diese mittels der Bestückeinrichtung mit Leiterstücken bestückt werden kann. Sobald alle Haltesegmenteinheiten mittels der Bestückeinrichtung mit Leiterstücken bestückt sind, kann die Vorrichtung mittels einer Drehung des zweiten Drehtisches an eine nächste Station befördert werden.

Eine weitere Station kann eine Zusammenführungsstation sein. Es ist denkbar, dass an dieser Station die Leiterstücke, wie oben beschrieben, zu der gewünschten Endkonfiguration zusammengeführt werden.

Ebenso denkbar ist es, dass die Zusammenführung der Leiterstücke in die gewünschte Endkonfiguration bereits während des Transports der mit den Leiterstücken bestückten Vorrichtung mittels des zweiten Drehtisches von der Bestückstation zu der Zusammenführungsstation beginnt und an der Zusammenführungsstation weitergeführt und beendet wird.

Alternativ kann die Zusammenführung der Leiterstücke in die gewünschte Endkonfiguration während des Transports der mit den Leiterstücken bestückten Vorrichtung mittels des zweiten Drehtisches von der Bestückstation zu einer nächsten Station durchgeführt werden, so dass die Leiterstücke bereits in der gewünschten Endkonfiguration angeordnet sind, wenn die Vorrichtung die nächste Station erreicht.

Zudem kann eine Entnahmestation vorgesehen sein. An der Entnahmestation können die in die Endkonfiguration überführten Leiterstücke aus der Vorrichtung entnommen werden.

Ebenso denkbar ist es, dass die Vorrichtungen als separate Einheiten, bspw. nebeneinander angeordnet sein können. Jede Vorrichtung kann dabei eine eigene Bestückeinrichtung aufweisen.

Weiter wird die zu lösende Aufgabe durch ein Verfahren zur Erzeugung einer insbesondere kreisförmigen Endkonfiguration von Leiterstücken, vorzugsweise Hairpins, die insbesondere mit rechteckigem Leiterquerschnitt ausgebildet sind, zur Bestückung eines Statorkerns, wobei jedes Leiterstück mindestens einen, insbesondere zwei, Schenkel aufweist, mit den Merkmalen des Anspruchs 12 gelöst, wobei das Verfahren die Schritte umfasst:
Anordnen der Leiterstücke in einer Startposition in, insbesondere bogenförmigen, Leiterstücksegmenten. Dabei sind die Leiterstücksegmente in einem jeweiligen ersten radialen Abstand zu einem Mittelpunkt angeordnet.

Insbesondere können die Leiterstücksegmente auf einer ersten Kreisbahn (d. h. mit einem jeweils gleichen ersten radialen Abstand zum Mittelpunkt) um den Mittelpunkt angeordnet sein. Ebenso denkbar ist es, dass die Leiterstücksegmente jeweils in einem unterschiedlichen Abstand zum Mittelpunkt angeordnet sein können.

Gleichzeitiges Bewegen der Leiterstücksegmente aus der Startposition radial einwärts in eine Endposition, wobei die Leiterstücksegmente in der Endposition in der Endkonfiguration angeordnet sind. Alternativ können mindestens zwei Leiterstücksegmente, insbesondere alle Leiterstücksegmente, zeitlich versetzt, also nacheinander, aus der Startposition radial einwärts in die Endposition bewegt werden. Ebenso ist es denkbar, dass mindestens zwei Leiterstücksegmente zeitgleich und mindestens ein Leiterstücksegment zeitversetzt dazu aus der Startposition radial einwärts in die Endposition bewegt werden.

Dabei werden die Leiterstücke von der Startposition in die Endposition au feiner zumindest teilweise geradlinigen Bewegungsbahn bewegt.

Die Leiterstücksegmente können von der Startposition in die Endposition ausschließlich geradlinig translatorisch bewegt werden. Die Leiterstücksegmente können geradgeführt bewegt werden. Mit anderen Worten, die Leiterstücksegmente können während ihrer linearen Bewegung geführt werden.

Die Leiterstücksegmente können jeweils auf einer Bewegungsbahn zwischen ihrer Startposition und ihrer Endposition bewegt werden. Die Bewegungsbahnen der Leiterstücksegmente können tangential zu einer dritten Kreisbahn um den Mittelpunkt oder durch den Mittelpunkt verlaufen. Werden mindestens drei Leiterstücksegmente bewegt, so kann ihre jeweilige Bewegungsbahn tangential zu einer dritten Kreisbahn um den Mittelpunkt verlaufen. Mit anderen Worten, die Bewegungsbahnen der Leiterstücksegmente verlaufen insbesondere nicht durch den Mittelpunkt. Insbesondere ist der Durchmesser der dritten Kreisbahn immer größer Null. Werden (ausschließlich) zwei Leiterstücke bewegt, so kann ihre jeweilige Bewegungsbahn durch den Mittelpunkt verlaufen.

Das Verfahren kann weiter den Schritt umfassen:
Anordnen der Leiterstücke in einer Endposition in mindestens einem, insbesondere bogenförmigen, unbeweglichen Leiterstücksegment. Insbesondere sind die Leiterstücke in dem unbeweglichen Leiterstücksegment in der Endkonfiguration angeordnet.

Zur Durchführung des Verfahrens kann eine Vorrichtung gemäß obiger Ausführungen oder eine Maschine gemäß obiger Ausführungen verwendet werden.

Hinsichtlich der mit dem Verfahren erzielbaren Vorteile wird auf die diesbezüglichen Ausführungen zur Vorrichtung oder zur Maschine verwiesen. Zur weiteren Ausgestaltung des Verfahrens können die im Zusammenhang mit der Vorrichtung oder der Maschine beschriebenen Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht auf eine erfindungsgemäße Vorrichtung in einem ersten Zustand,
- Fig. 2: eine perspektivische Ansicht auf die Vorrichtung gemäß Figur 1 in einem zweiten Zustand,
- Fig. 3: eine perspektivische Ansicht auf die Vorrichtung gemäß Figur 1 in einem dritten Zustand,
- Fig. 4: eine perspektivische Ansicht auf die Vorrichtung gemäß Figur 1 in einem vierten Zustand,
- Fig. 5: einen Ausschnitt einer Draufsicht auf die Vorrichtung gemäß Figur 4,
- Fig. 6: eine perspektivische Ansicht einer Haltesegmenteinheit der Vorrichtung gemäß Figur 1,
- Fig. 7: einen Ausschnitt einer perspektivischen Ansicht der Haltesegmenteinheit gemäß Figur 6
- Fig. 8: eine schematische Darstellung der Vorrichtung mit zwei Haltesegmenteinheiten;
- Fig. 9: eine schematische Darstellung der Vorrichtung gemäß Fig. 8 mit zwei Haltesegmenteinheiten in der Endposition;
- Fig. 10: eine schematische Darstellung einer Vorrichtung mit gekrümmten Bewegungsbahnen und
- Fig. 11: eine schematische Darstellung einer erfindungsgemäßen Maschine.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

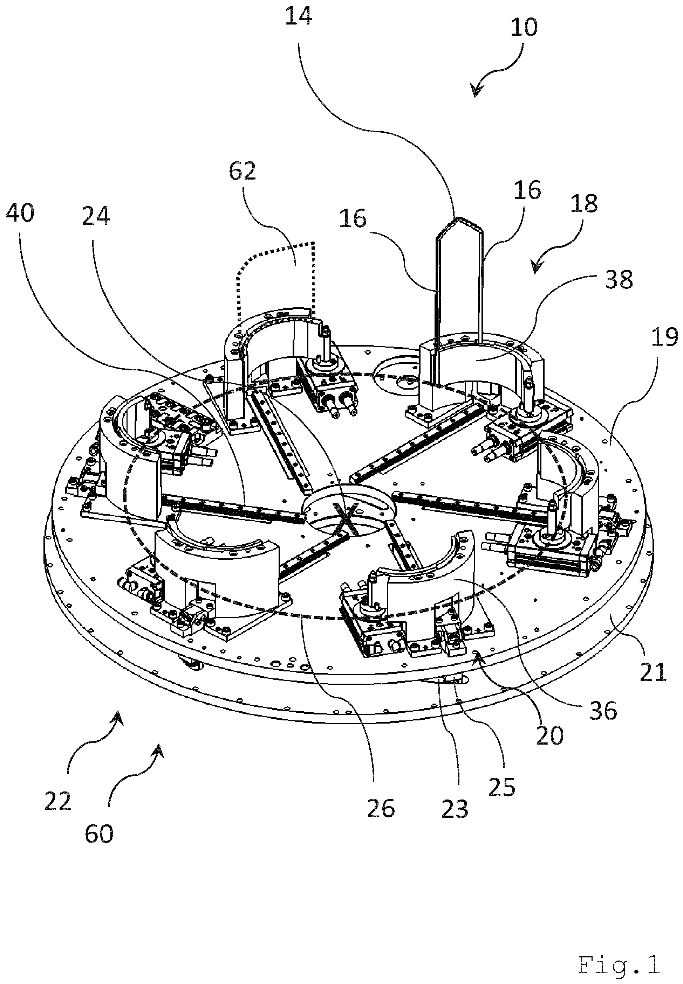

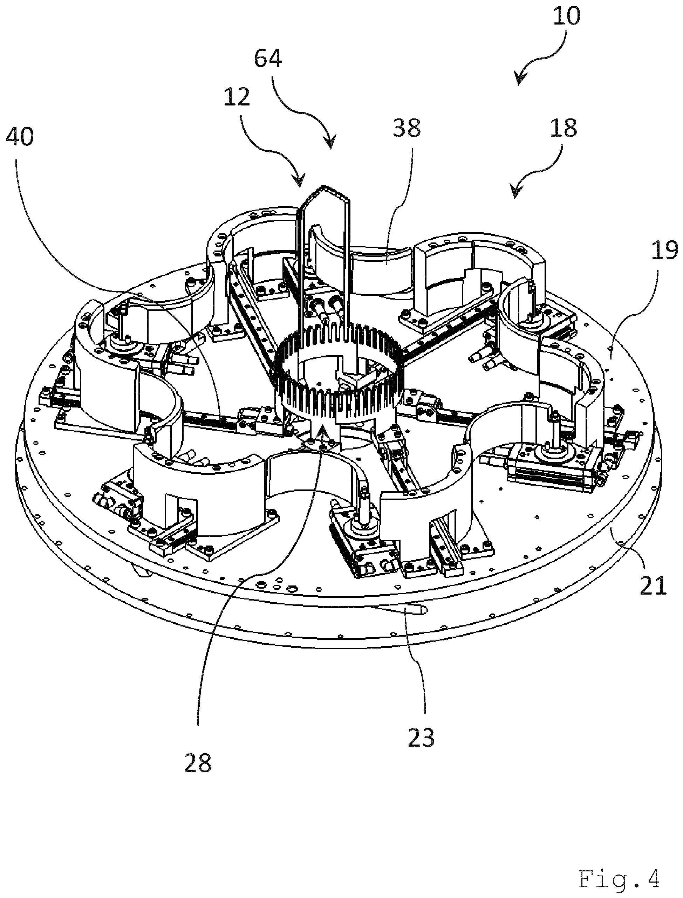

Figur 1 zeigt eine perspektivische Ansicht auf eine erfindungsgemäße Vorrichtung 10 in einem ersten Zustand. Mittels der Vorrichtung 10 kann vorliegend eine kreisförmige Endkonfiguration 12 von Leiterstücken 14 (vgl. Fig. 4) erzielt werden. Dabei weist jedes Leiterstück 14 mindestens einen oder zwei Schenkel 16 auf.

Die Vorrichtung 10 weist vorliegend sechs Haltesegmenteinrichtungen 18 auf. Die Haltesegmenteinrichtungen 18 sind auf einer scheibenförmigen Basisscheibe 19 gleichmäßig verteilt angeordnet.

Jede Haltesegmenteinrichtung 18 weist eine Haltesegmenteinheit 20 auf. Jede Haltesegmenteinheit 20 nimmt eine Vielzahl von Leiterstücken 14 auf. Dabei sind jeweils alle Schenkel 16 der aufgenommenen Leiterstücke 14 in der Haltesegmenteinheit 20 fixiert aufgenommen (gehalten).

Die Haltesegmenteinheiten 20 sind beweglich ausgebildet. Vorliegend werden die Haltesegmenteinheiten 20 mittels eines Kulissenantriebs bewegt. Hierzu ist unterhalb der Basisscheibe 19 ist ein scheibenförmiges Kulissenelement 21 angeordnet. Das Kulissenelement 21 weist (entsprechend der Anzahl der Haltesegmenteinheiten) sechs gekrümmte Kulissenbahnen 23 auf. Jede Haltesegmenteinheit 20 weist einen Fortsatz 25 auf, der in die jeweilige Kulissenbahn 23 eingreift.

Die Haltesegmenteinrichtungen 18 weisen jeweils eine Führungsschiene 40 auf. Jede Haltesegmenteinheit 20 ist entlang der jeweiligen Führungsschiene 40 beweglich ausgebildet. Die Führungsschienen 40 sind auf der Basisscheibe 19 angeordnet. Wird nun das Kulissenelement 21 gedreht, so wird einerseits der Fortsatz 25 jeder Haltesegmenteinheit 20 in der jeweiligen Kulissenbahn 23 geführt. Andererseits wird jede Haltesegmenteinheit mittels der Führungsschienen 40 auf eine Bewegung entlang der Führungsschienen 40 gezwungen. Damit können die Haltesegmenteinheiten 20 mittels einer rotatorischen Bewegung des Kulissenelements 21 entlang der Führungsschienen 40 bewegt werden.

Die Leiterstücke 14 sind als Leiterstücksegmente 62 in den Haltesegmenteinheiten 20 angeordnet. Mit anderen Worten, mehrere Leiterstücke 14 bilden ein bogenförmiges Leiterstücksegment 62, welches in einer Haltesegmenteinheit 20 aufgenommen ist. Vorliegend ist aus Gründen der Übersichtlichkeit lediglich ein Leiterstück 14 dargestellt. Ebenfalls aus Übersichtlichkeitsgründen sind die Leiterstücksegmente 62 nicht dargestellt und lediglich an einer Haltesegmenteinheit 20 gestrichelt angedeutet.

Die Haltesegmenteinheiten 20 sind in Figur 1 in einer Startposition 22 angeordnet. In dieser Startposition 22 werden die Haltesegmenteinheiten 20 mit Leiterstücken 14 bestückt. Hierfür kann eine Bestückeinrichtung 58 vorgesehen sein (siehe weiter unten). Auch die Leiterstücksegmente 62 sind in Figur 1 in einer Startposition 60 angeordnet.

In der Startposition 22 sind vorliegend die Haltesegmenteinheiten 20 kreisförmig um einen Mittelpunkt 24 angeordnet. Die Haltesegmenteinheiten 20 weisen jeweils einen gleichen Abstand zum Mittelpunkt 24 auf. Mit anderen Worten, die Haltesegmenteinheiten 20 sind auf einer ersten Kreisbahn 26 um den Mittelpunkt 24 angeordnet.

Jede Haltesegmenteinrichtung 18 weist ein erstes Führungselement 36 und ein zweites Führungselement 38 auf. Die ersten Führungselemente 36, die zweiten Führungselemente 38, sowie die Haltesegmenteinheiten 20 weisen vorliegend eine gebogene (kreissegmentartige) Form auf.

Jede Haltesegmenteinheit 20 ist in ihrer Startposition 22 zwischen dem ersten Führungselement 36 und dem zweiten Führungselement 38 angeordnet. Mit anderen Worten, die beiden Führungselemente 36, 38 fixieren die Haltesegmenteinheit 20 klemmend.

Die ersten Führungselemente 36 sind dabei an der dem Mittelpunkt 24 abgewandten Seiten der Haltesegmenteinheiten 20 angeordnet. Vorliegend sind die ersten Führungselemente 36 fix an der Basisscheibe 19 angeordnet. Mit anderen Worten die ersten Führungselemente 36 sind gegenüber der Basisschiebe 19 unbeweglich.

Die zweiten Führungselemente 38 sind an der dem Mittelpunkt 24 zugewandten Seiten der Haltesegmenteinheiten 20 angeordnet. Vorliegend sind die zweiten Führungselemente 38 schwenkbar auf der Basisscheibe 19 angeordnet. Dabei können die zweiten Führungselemente 38 in eine erste (in Figur 1 gezeigte) Bestückposition geschwenkt werden.

In dem dargestellten Zustand befinden sich die zweiten Führungselemente 38 in der Bestückposition. Mit andren Worten, die zweiten Führungselemente 38 sind zugeschwenkt, sodass eine radial einwärts (in Richtung Mittelpunkt 24) gerichtete Bewegung der Haltesegmenteinheiten 20 nicht möglich ist.

In der Bestückposition bilden die zweiten Führungselemente 38 (sowie die ersten Führungselemente 36) eine Führung für zu bestückenden Leiterstücke 14. In der Bestückposition blockieren (versperren) die zweiten Führungselemente 38 den Haltesegmenteinheiten 20 eine radial einwärts gerichtete Bewegung.

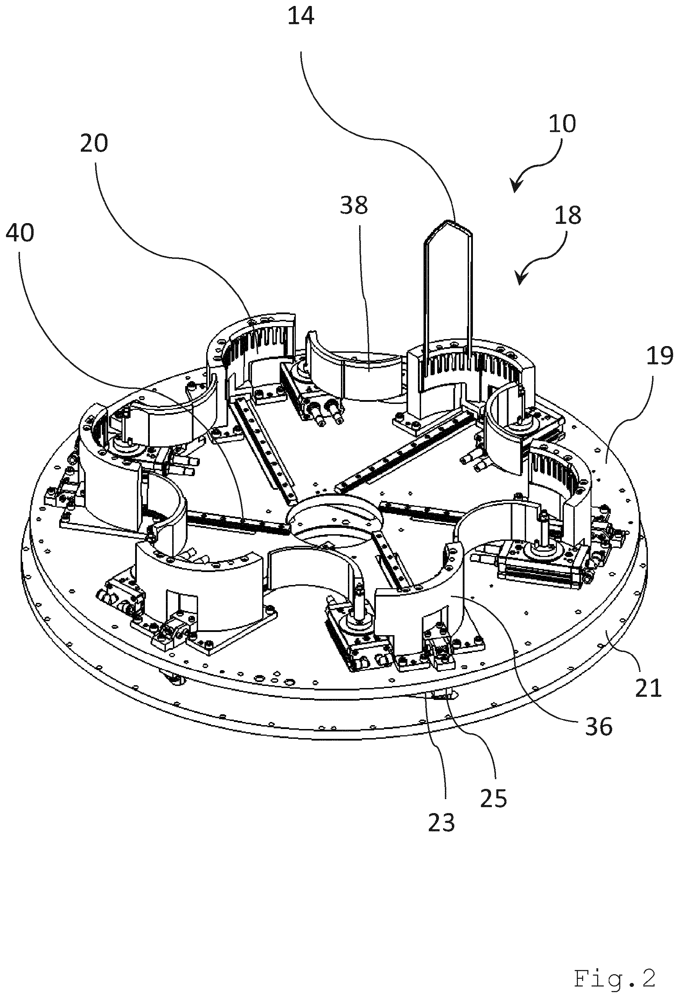

Die zweiten Führungselemente 38 können in eine (in Figur 2 gezeigte) Freigabeposition geschwenkt werden. In der Freigabeposition geben die zweiten Führungselemente 38 die Haltesegmenteinheiten 20 (bzw. den radial einwärts gerichteten Weg) frei, sodass Haltesegmenteinheiten 20 sich radial einwärts (in Richtung Mittelpunkt 24) bewegen können.

Die Haltesegmenteinheiten 20 können aus der in Figur 1 gezeigten Startposition 22 entlang der Führungsschienen 40 radial einwärts bewegt werden. Dabei dienen die Führungsschienen 40 als eine Führung für die Haltesegmenteinheiten 20.

Figur 2 zeigt eine perspektivische Ansicht auf die Vorrichtung 10 gemäß Figur 1 in einem zweiten Zustand. In dem dargestellten Zustand befinden sich die zweiten Führungselemente 38 in der Freigabeposition. Mit anderen Worten, die zweiten Führungselemente 38 sind aufgeschwenkt, sodass eine Bewegung der Haltesegmenteinheiten 20 entlang der jeweiligen Führungsschienen 40 möglich ist.

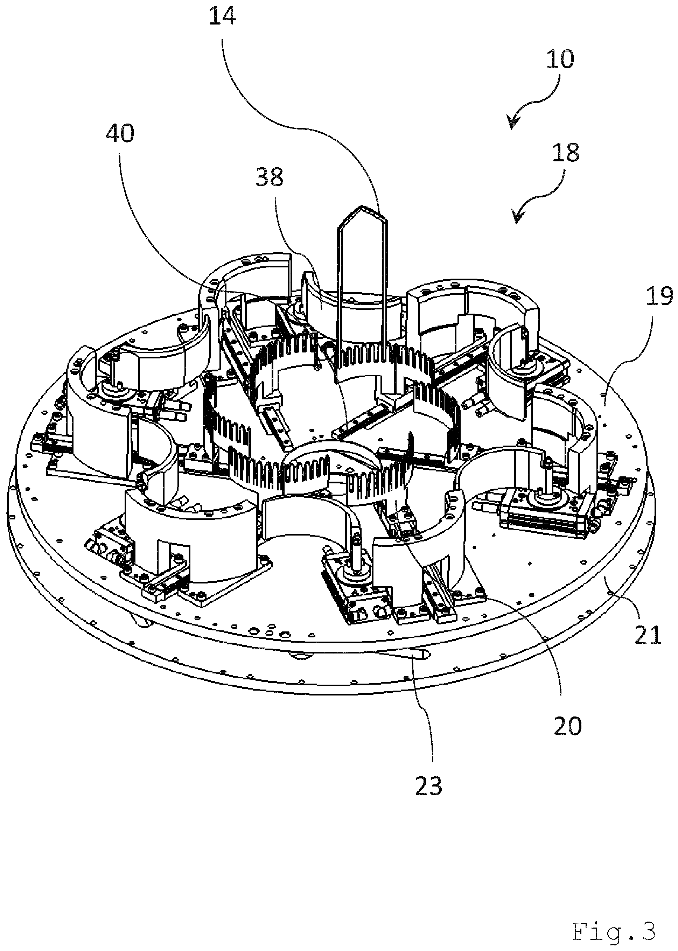

Figur 3 zeigt eine perspektivische Ansicht auf die Vorrichtung 10 gemäß Figur 1 in einem dritten Zustand. In dem dargestellten dritten Zustand haben sich die Haltesegmenteinheiten 20 bereits ein Stück weit radial einwärts entlang der jeweiligen Führungsschienen 40 bewegt.

Figur 4 zeigt eine perspektivische Ansicht auf die Vorrichtung 10 gemäß Figur 1 in einem vierten Zustand. In dem dargestellten Zustand der Vorrichtung 10 befinden sich die Haltesegmenteinheiten 20 in einer Endposition 28. In der Endposition 28 sind die Leiterstücke 14 zu der gewünschten Endkonfiguration 12 zusammengeführt.

Die Haltesegmenteinheiten 20 können entlang der jeweiligen Führungsschienen 40 von der Startposition 22 in die Endposition 28 bewegt (überführt) werden. Mit anderen Worten, die Haltesegmenteinheiten 20 sind zwischen der Startposition 22 und der Endposition 28 beweglich ausgebildet.

In dem dargestellten Zustand befinden sich auch die Leiterstücksegmente 62 (nicht dargestellt) in ihrer Endposition 64 und bilden die gewünschte Endkonfiguration 12 der Leiterstücke 14. Die Leiterstücksegmente 62 können zwischen ihrer Startposition 60 und ihrer Endposition 64 (entlang der Führungsschienen 40) bewegt werden. Vorliegend geschieht dies mittels der jeweiligen Haltesegmenteinheiten 20.

In dem dargestellten Zustand befinden sich die zweiten Führungselemente 38 weiterhin in ihrer Freigabeposition. Mit anderen Worten, die zweiten Führungselemente 38 sind weiterhin aufgeschwenkt.

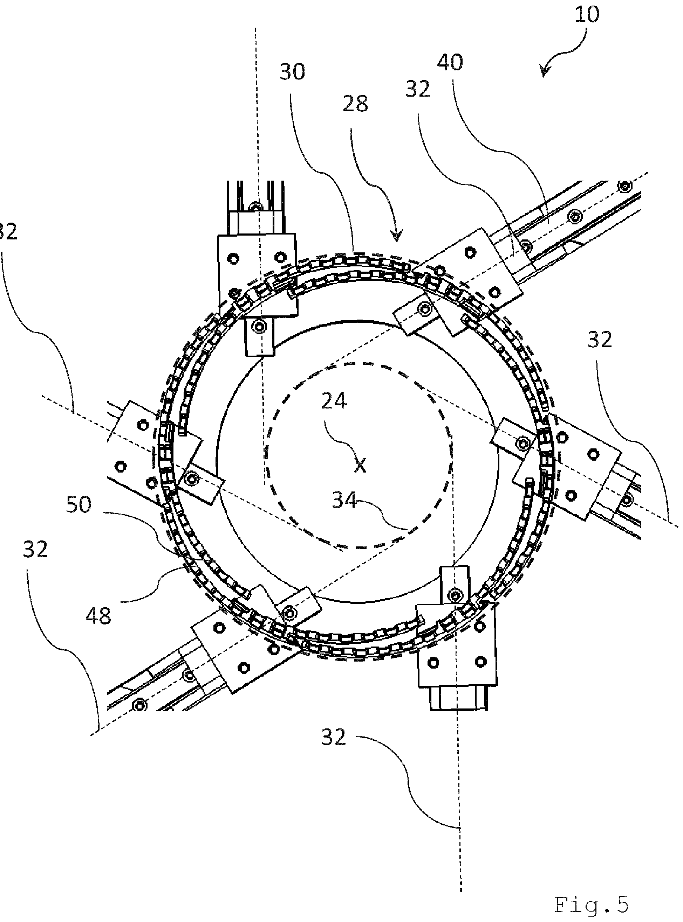

Figur 5 zeigt einen Ausschnitt einer Draufsicht auf die Vorrichtung 10 gemäß Figur 4. Die Haltesegmenteinheiten 20 sind in ihrer Endposition 28 angeordnet. Vorliegend sind die Haltesegmenteinheiten 20 auf einer zweiten Kreisbahn 30 um den Mittelpunkt 24 angeordnet. Mit anderen Worten, der Abstand zwischen jeder Haltesegmenteinheit 20 und dem Mittelpunkt 24 ist jeweils gleich groß.

Jede Haltesegmenteinheit 20 bewegt sich auf ihrer Führungsschiene 40 entlang einer Bewegungsbahn 32. Dabei entspricht die Führungsschiene 40 der jeweiligen Bewegungsbahn 32. Mit anderen Worten, jede Führungsschiene 40 ist parallel zur jeweiligen Bewegungsbahn 32 oder identisch mit der jeweiligen Bewegungsbahn 32 angeordnet. Die Bewegungsbahnen 32 sind jeweils mittels einer gestrichelten Linie dargestellt.

Die Bewegungsbahnen 32 verlaufen tangential zu einer dritten Kreisbahn 34 um den Mittelpunkt 24. Die dritte Kreisbahn 34 ist stets größer Null. Mit anderen Worten, die Bewegungsbahnen 32 verlaufen nicht durch den Mittelpunkt 24.

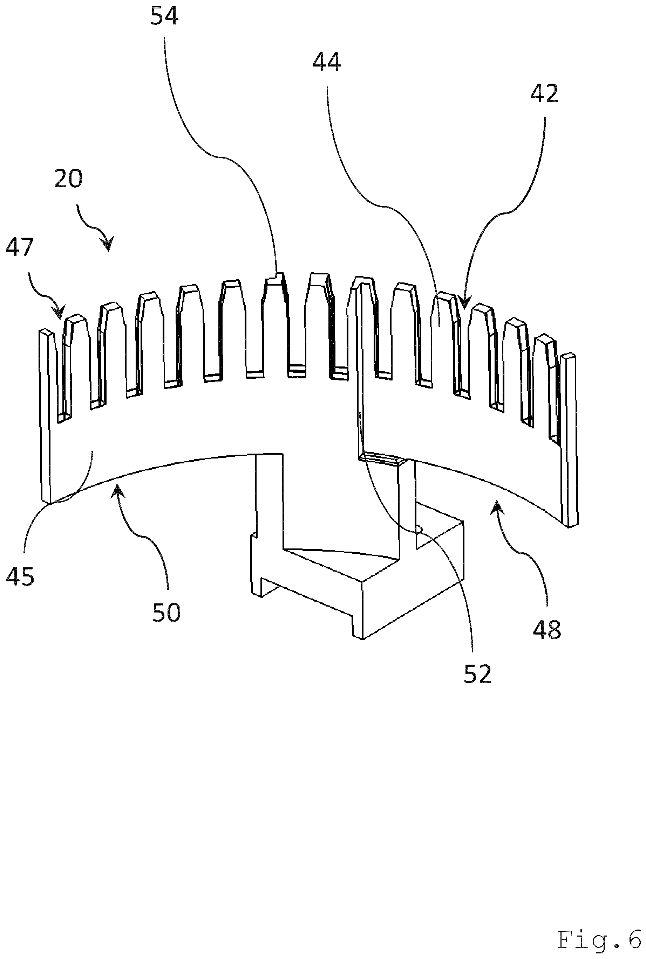

Figur 6 zeigt eine perspektivische Ansicht einer Haltesegmenteinheit 20 der Vorrichtung 10 gemäß Figur 1. Die Haltesegmenteinheit 20 ist bogenartig ausgebildet. Die Haltesegmenteinheit 20 weist mehrere Aufnahmen 42 auf. Diese dienen der Aufnahme von Schenkeln 16 eines Leiterstücks 14.

Die Haltesegmenteinheit 20 ist kammartig ausgebildet. Mit anderen Worten, die Haltesegmenteinheit 20 ist in Form eines Kamms mit Kammzinken 44 und Kammrücken 45 ausgebildet.

Jede Aufnahme 42 der Haltesegmenteinheit 20 ist zwischen zwei benachbarten Kammzinken 44 angeordnet. Die Kammzinken 44 sind länglich und gerade (stiftartig) ausgebildet und weisen an ihrem dem Kammerrücken 45 abgewandten Ende einen verjüngenden Abschnitt 47 auf. Der verjüngende Abschnitt 47 erleichtert das Einführen der zu bestückende Leiterstücke 14 in die Aufnahmen 42.

Die Haltesegmenteinheit 20 weist einen ersten Überlappungsbereich 48 und einen zweiten Überlappungsbereich 50 auf. Dabei grenzt der erste Überlappungsbereich 48 an einen ersten Absatz 52 der Haltesegmenteinheit 20 an. Der zweite Überlappungsbereich 50 grenzt an einen zweiten Absatz 54 der Haltesegmenteinheit 20 an. Beide Absätze 52, 54 sind stufenförmig ausgebildet.

Mit anderen Worten der erste Überlappungsbereich 48 und der zweite Überlappungsbereich 50 sind in Radialrichtung versetzt zueinander angeordnet. Der erste Überlappungsbereich 48 und der zweite Überlappungsbereich 50 sind komplementär zueinander ausgebildet. Ebenso denkbar ist es, dass der erste Überlappungsbereich 48 einer Haltesegmenteinheit 20 komplementär zu dem zweiten Überlappungsbereich 50 einer benachbarten Haltesegmenteinheit 20 ausgebildet ist.

Der erste Überlappungsbereich 48 einer ersten Haltesegmenteinheit 20 überlappt in der Endposition 28 der Haltesegmenteinheiten 20 mit dem zweiten Überlappungsbereich 50 einer zweiten, zur ersten Haltesegmenteinheit 20 benachbarten, Haltesegmenteinheit 20.

Die Haltesegmenteinheiten 20 überlappen sich in den jeweiligen Überlappungsbereichen 48, 50, wobei die Überlappung der Überlappungsbereiche 48, 50 sich von dem ersten Absatz 48 der ersten Haltesegmenteinheit 20 bis zum zweiten Absatz 50 der zweiten, zur ersten Haltesegmenteinheit 20 benachbarten, Haltesegmenteinheit 20 erstreckt (vgl. Figur 5).

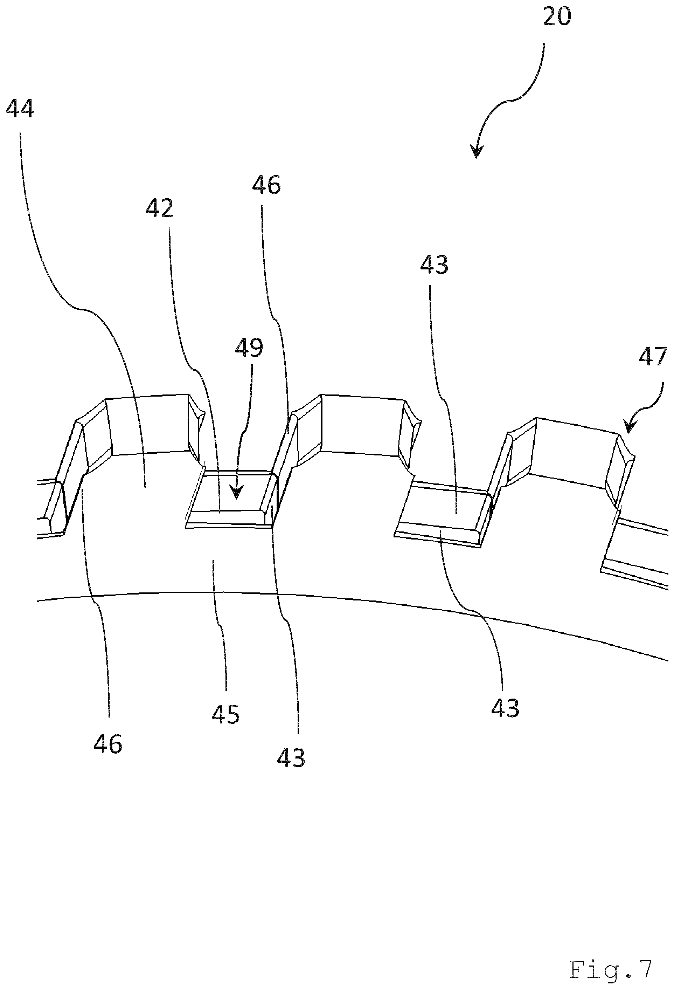

Figur 7 zeigt einen Ausschnitt einer perspektivischen Ansicht der Haltesegmenteinheit 20 gemäß Figur 5. Wie in Figur 7 gut zu erkennen ist, werden die Aufnahmen 42 jeweils von fünf Wandungen 43 räumlich begrenzt. Dabei sind jeweils drei benachbarte Wandungen 43 senkrecht zu einer angeordnet. Die Aufnahmen 42 sind also taschenförmig ausgebildet.

Die fünf Wandungen 43 einer Aufnahme 42 begrenzen den Aufnahmeraum 49 räumlich. Vorliegend ist der Aufnahmeraum 49 im Wesentlichen quaderförmig ausgebildet. Es ist ebenso eine andere Form der Aufnahmen 52 bzw. des jeweiligen Aufnahmeraums 49, bspw. zylinderförmig (z. B. für Leiterstücke mit einem runden Querschnitt), denkbar.

Die Haltesegmenteinheit 20 weist vorliegend mehrere Führungskanten 46 auf. Es sind mehrere Führungskanten 46 an einer dem Mittelpunkt 24 zugewandten Seite der Haltesegmenteinheit 20 angeordnet. Es sind ebenso mehrere Führungskanten 46 an einer der Mittelpunkt 24 abgewandten Seite der Haltesegmenteinheit 20 angeordnet.

Zwischen jeweils zwei benachbarten Kammzinken 44 und entlang jedes Kammzinkens 44 ist eine Führungskante 46 angeordnet. Mit anderen Worten, an jedem Kammzinken 44 ist entlang dessen Längserstreckung eine Führungskante 46 angeordnet, wobei diese zwischen zwei benachbarten Kammzinken 44 angeordnet ist.

Zwischen zwei benachbarten Kammzinken 44 sind also vier Führungskanten 46 angeordnet. Diese sind schräg in den Raum zwischen den Kammzinken 44 hervorstehend angeordnet. Damit bilden sie eine Führung beim Einführen der Leiterstücke 14 bzw. der Schenkel 16 der Leiterstücke 14 in die jeweiligen Aufnahmen 42.

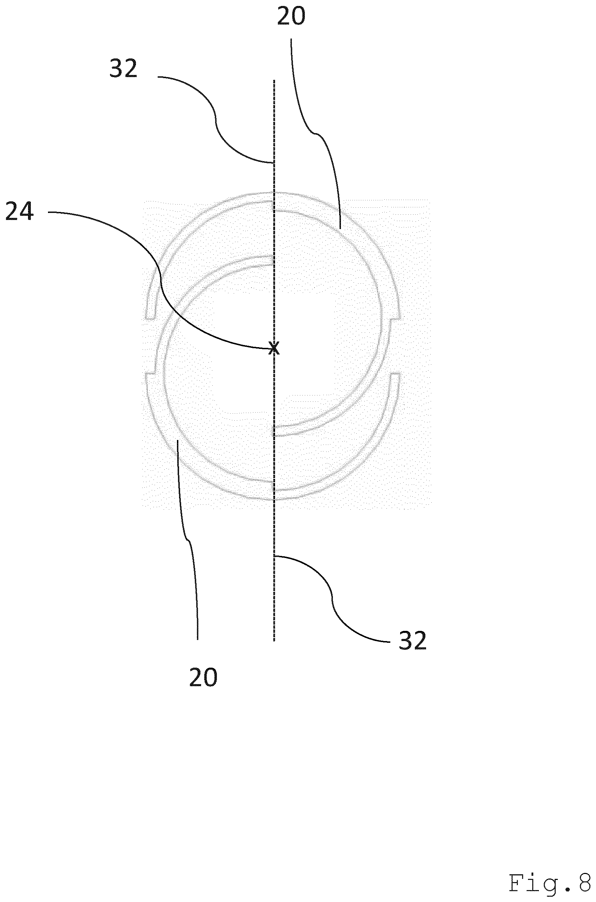

Figur 8 zeigt eine schematische Darstellung der Vorrichtung 10 mit zwei Haltesegmenteinheiten 20. Die Bewegungsbahnen 32 der beiden Haltesegmenteinheiten 20 verlaufen, anders als bei der in den Figuren 1 bis 5 gezeigten Ausführungsform der Vorrichtung 10, geradlinig durch den Mittelpunkt 24. Vorliegend ist der Verlauf der beiden Bewegungsbahnen 32 der beiden Haltesegmenteinheiten 20 identisch. In dem dargestellten Zustand sind die beiden Haltesegmenteinheiten 20 beabstandet zueinander angeordnet.

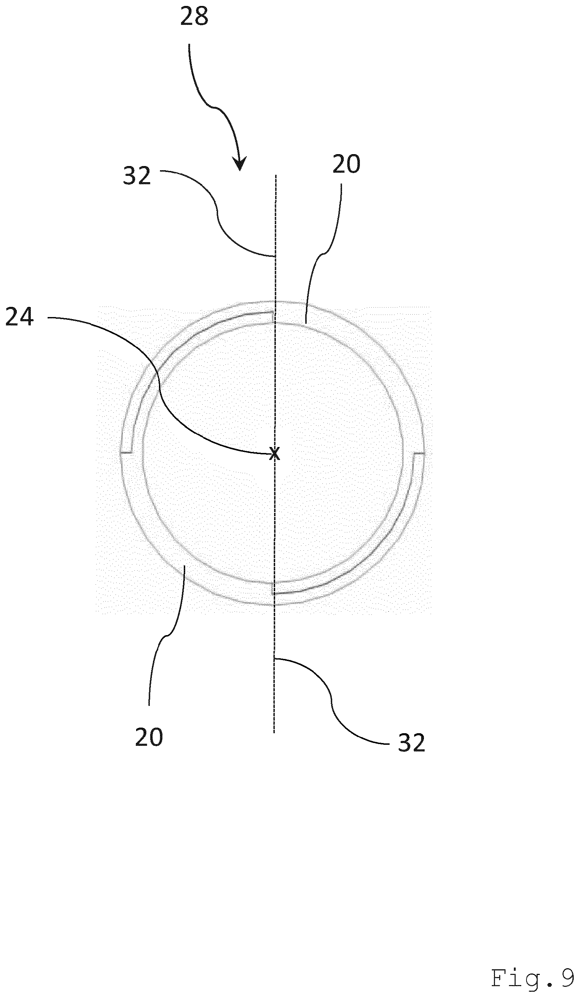

Figur 9 zeigt eine schematische Darstellung der Vorrichtung 10 gemäß Figur 8 in einem anderen Zustand. In dem dargestellten Zustand sind die Haltesegmenteinheiten 20 in der Endposition 28 angeordnet. Die beiden Haltesegmenteinheiten 20 bilden in der Endposition 28 eine kreisförmige Struktur.

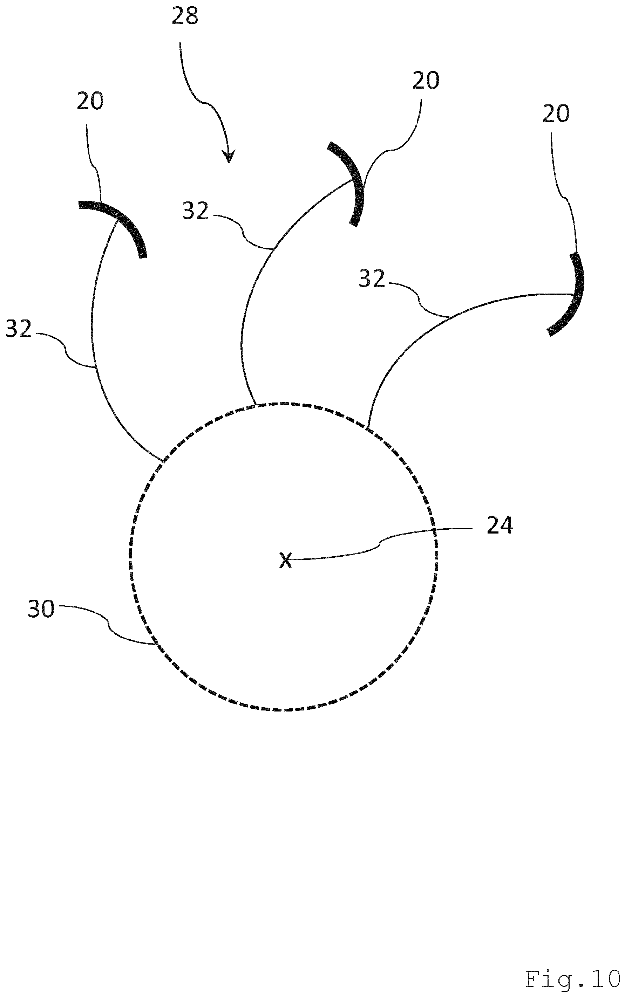

Figur 10 zeigt eine schematische Darstellung der Vorrichtung 10 mit gekrümmten Bewegungsbahnen 32. Die Haltesegmenteinheiten 20 sind vorliegend in der Startposition 22 kreisförmig um dem Mittelpunkt 24 angeordnet, wobei aus Gründen der Übersicht die Haltesegmenteinheiten 20 lediglich mittels drei Haltesegmenteinheiten 20 dargestellt sind. Die Haltesegmenteinheiten 20 bewegen sich auf bogenförmig gekrümmten Bewegungsbahnen 32 aus der abgebildeten Startposition 22 in die Endposition 28. In der Endposition 28 sind die Haltesegmenteinheiten 20 auf der zweiten Kreisbahn 30 um den Mittelpunkt 24 angeordnet.

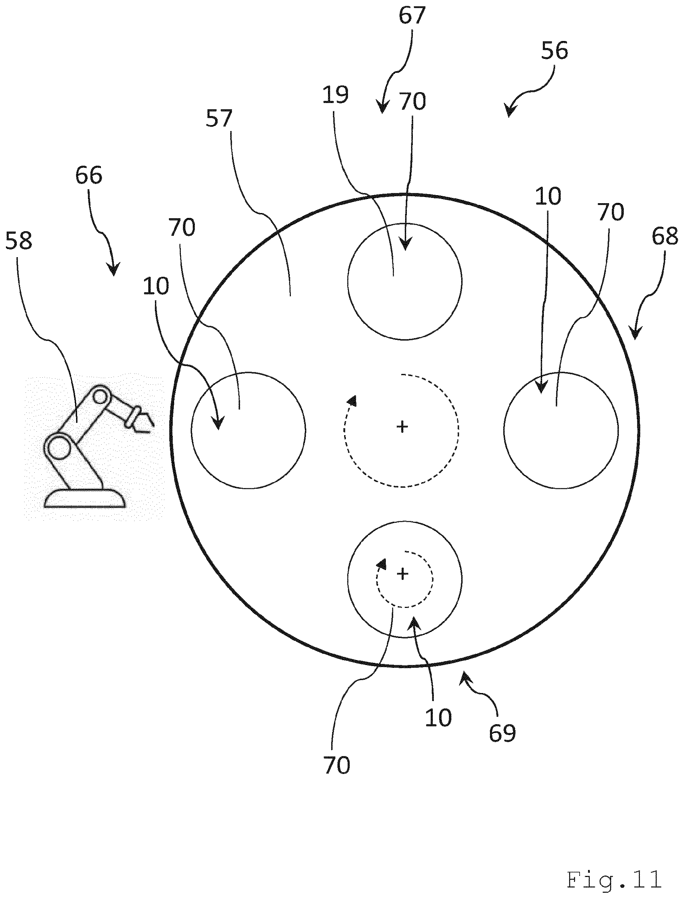

Figur 11 zeigt eine schematische Darstellung einer erfindungsgemäßen Maschine 56. Die Maschine 56 weist einen zweiten Drehtisch 57 auf. Auf dem zweiten Drehtisch 57 sind vorliegend vier oben beschriebene Vorrichtungen 10 angeordnet.

Jede der vier Vorrichtungen 10 ist mittels eines ersten Drehtisches 70 drehbar auf dem zweiten Drehtisch 57 angeordnet. Dabei bildet insbesondere die Basisscheibe 19 der jeweiligen Vorrichtung 10 die Oberfläche des jeweiligen ersten Drehtisches 57.

Jede der vier Vorrichtungen 10 kann durch eine Drehung des zweiten Drehtisches 57 zur Bestückeinrichtung 58 bewegt werden. Dort kann die Vorrichtung 10 mit Leiterstücken 14 mittels der Bestückeinrichtung 58 bestückt werden. Anschließend kann der zweite Drehtisch 57 weiterrotiert werden, sodass die nächste Vorrichtung 10 zur Bestückeinrichtung 58 bewegt werden kann.

Sobald eine Vorrichtung 10 mit Leiterstücken 14 bestückt wurde und mittels des zweiten Drehtisches 57 weiter bewegt (gedreht) wurde, kann die oben beschriebene Zusammenführung der Leiterstücke 14 in die Endkonfiguration 12 umgesetzt werden. Ebenso denkbar ist es, dass die oben beschriebene Zusammenführung der Leiterstücke 14 in die Endkonfiguration 12 an vorbestimmten Positionen (Drehpositionen) des zweiten Drehtisches 57 umgesetzt wird.

Es ist denkbar, dass an zumindest einer Position (Drehposition) des zweiten Drehtisches 57 eine Entnahme der in der Endkonfiguration 12 zusammengeführten Leiterstücke 14 aus der Vorrichtung 10 bzw. der Maschine 56 umgesetzt wird.

Am zweiten Drehtisch sind vorliegend verschiedene Stationen realisiert. So stellt vorliegend die Bestückeinrichtung 58 eine Bestückstation 66 dar, an der die jeweilige sich an der Bestückstation 66 befindende Vorrichtung 10 mit Leiterstücken 14 bestückt werden kann.

Nach der Bestückstation 66 folgt im Uhrzeigersinn eine Zusammenführungsstation 67, an der die Leiterstücke 14 wie oben beschrieben in ihre Endkonfiguration 12 überführt werden.

Nach der Zusammenführungsstation 67 folgt im Uhrzeigersinn eine Entnahmestation 68 zur Entnahme der in die Endkonfiguration 12 überführten Leiterstücke 14 aus der jeweiligen Vorrichtung 10.

Nach der Entnahmestation 68 folgt im Uhrzeigersinn eine Zurückführungsstation 69 zum Zurückführen der Haltesegmenteinheiten 20 in deren Startposition 22. Dabei können die zweiten Führungselemente 38 wieder in ihre jeweilige Bestückposition zurückgeschwenkt werden, so dass die Vorrichtung 10 wieder zum Bestücken mit Leiterstücken 14 bereitgestellt werden kann.

Figur 11 zeigt eine schematische Darstellung einer erfindungsgemäßen Maschine 56. Die Maschine 56 weist einen zweiten Drehtisch 57 auf. Auf dem zweiten Drehtisch 57 sind vorliegend vier oben beschriebene Vorrichtungen 10 angeordnet.

Jede der vier Vorrichtungen 10 ist mittels eines ersten Drehtisches 70 drehbar auf dem zweiten Drehtisch 57 angeordnet. Dabei bildet insbesondere die Basisscheibe 19 der jeweiligen Vorrichtung 10 die Oberfläche des jeweiligen ersten Drehtisches 57.

Jede der vier Vorrichtungen 10 kann durch eine Drehung des zweiten Drehtisches 57 zur Bestückeinrichtung 58 bewegt werden. Dort kann die Vorrichtung 10 mit Leiterstücken 14 mittels der Bestückeinrichtung 58 bestückt werden. Anschließend kann der zweite Drehtisch 57 weiterrotiert werden, sodass die nächste Vorrichtung 10 zur Bestückeinrichtung 58 bewegt werden kann.

Sobald eine Vorrichtung 10 mit Leiterstücken 14 bestückt wurde und mittels des zweiten Drehtisches 57 weiter bewegt (gedreht) wurde, kann die oben beschriebene Zusammenführung der Leiterstücke 14 in die Endkonfiguration 12 umgesetzt werden. Ebenso denkbar ist es, dass die oben beschriebene Zusammenführung der Leiterstücke 14 in die Endkonfiguration 12 an vorbestimmten Positionen (Drehpositionen) des zweiten Drehtisches 57 umgesetzt wird.

Es ist denkbar, dass an zumindest einer Position (Drehposition) des zweiten Drehtisches 57 eine Entnahme der in der Endkonfiguration 12 zusammengeführten Leiterstücke 14 aus der Vorrichtung 10 bzw. der Maschine 56 umgesetzt wird.

Am zweiten Drehtisch sind vorliegend verschiedene Stationen realisiert. So stellt vorliegend die Bestückeinrichtung 58 eine Bestückstation 66 dar, an der die jeweilige sich an der Bestückstation 66 befindende Vorrichtung 10 mit Leiterstücken 14 bestückt werden kann.

Nach der Bestückstation 66 folgt im Uhrzeigersinn eine Zusammenführungsstation 67, an der die Leiterstücke 14 wie oben beschrieben in ihre Endkonfiguration 12 überführt werden.

Nach der Zusammenführungsstation 67 folgt im Uhrzeigersinn eine Entnahmestation 68 zur Entnahme der in die Endkonfiguration 12 überführten Leiterstücke 14 aus der jeweiligen Vorrichtung 10.

Nach der Entnahmestation 68 folgt im Uhrzeigersinn eine Zurückführungsstation 69 zum Zurückführen der Haltesegmenteinheiten 20 in deren Startposition 22. Dabei können die zweiten Führungselemente 38 wieder in ihre jeweilige Bestückposition zurückgeschwenkt werden, so dass die Vorrichtung 10 wieder zum Bestücken mit Leiterstücken 14 bereitgestellt werden kann.

## Patentansprüche

1. Vorrichtung (10) zur Erzeugung einer insbesondere kreisförmigen Endkonfiguration (12) von Leiterstücken (14), vorzugsweise Hairpins, die insbesondere mit rechteckigem Leiterquerschnitt ausgebildet sind, zur Bestückung eines Statorkerns, wobei jedes Leiterstück (14) mindestens einen, insbesondere zwei, Schenkel (16) aufweist, wobei die Vorrichtung (10) umfasst:
- mindestens zwei Haltesegmenteinrichtungen (18), wobei jede Haltesegmenteinrichtung (18) mindestens eine Haltesegmenteinheit (20) aufweist, die eingerichtet ist, um die Schenkel (16) mehrerer Leiterstücke (14) aufzunehmen und in einer vorgesehenen Ausrichtung zu halten und durch Bewegung der Haltesegmenteinheit (20) in die Endkonfiguration (12) zu überführen,
- wobei alle Schenkel eines in der Haltesegmenteinheit (20) aufgenommenen Leiterstücks (14) in der Haltesegmenteinheit (20) aufgenommen sind,
- wobei die Haltesegmenteinheiten (20) in einer Startposition (22) in einem jeweiligen ersten radialen Abstand zu einem Mittelpunkt (24), insbesondere auf einer ersten Kreisbahn (26) um den Mittelpunkt (24), angeordnet sind,
- wobei die Haltesegmenteinheiten (20) in einer Endposition (28) auf einer zweiten Kreisbahn (30) um den Mittelpunkt (24) angeordnet sind,
- wobei wenigstens eine, insbesondere mehrere, insbesondere jede Haltesegmenteinheit (20) entlang einer zumindest teilweise geradlinigen Bewegungsbahn (32) zwischen der Startposition (22) und der Endposition (28) in der Vorrichtung (10) bewegbar ausgebildet ist, um die in ihr aufgenommenen Leiterstücke (14) von der Startposition (22) in die Endposition (28) zu bewegen,
- wobei die Bewegungsbahnen (32) der Haltesegmenteinheiten (20) tangential zu einer dritten Kreisbahn (34) um den Mittelpunkt (24) oder durch den Mittelpunkt verlaufen.

2. Vorrichtung nach Anspruch 1, **dadurch gekennzeichnet, dass** jede Haltesegmenteinheit (20) entlang einer geradlinigen Bewegungsbahn (32) zwischen der Startposition (22) und der Endposition (28) in der Vorrichtung (10) bewegbar ausgebildet ist, um die in ihr aufgenommenen Leiterstücke (14) von der Startposition (22) in die Endposition (28) durch eine ausschließlich geradlinige translatorische Bewegung zu bewegen.

3. Vorrichtung (10) nach Anspruch 1 oder Anspruch 2,
**dadurch gekennzeichnet, dass** jede Haltesegmenteinrichtung (18) ein erstes Führungselement (36) und ein zweites Führungselement (38) umfasst, wobei die jeweilige Haltesegmenteinheit (20) in der Startposition (22) zwischen dem ersten Führungselement (36) und dem zweiten Führungselement (38) angeordnet ist, wobei das erste und das zweite Führungselement (36, 38) derart eingerichtet sind, dass die Leiterstücke (14) beim Bestücken der jeweiligen Haltesegmenteinheit (20) in der Startposition (22) zumindest teilweise durch die Führungselemente (36, 38) geführt sind.

4. Vorrichtung (10) nach Anspruch 3, **dadurch gekennzeichnet, dass** das zweite Führungselement (38) auf der dem Mittelpunkt (24) zugewandten Seite der Haltesegmenteinheit (20) angeordnet ist und derart beweglich, insbesondere schwenkbar ist, dass es zwischen einer Bestückposition, in der es die Haltesegmenteinheit (20) fixiert und eine Führung für zu bestückende Leiterstücke bildet, in eine Freigabeposition, in der es eine Bewegung der Haltesegmenteinheit (20) in ihre Endposition (28) ermöglicht, bewegbar ist.

5. Vorrichtung (10) nach einem der voranstehenden Ansprüche, **dadurch gekennzeichnet, dass** jede Haltesegmenteinrichtung (18) mindestens eine Führungseinrichtung, insbesondere in Form einer Führungsschiene (40), zur geführten Bewegung der Haltesegmenteinheit (20) entlang der Bewegungsbahn (32), insbesondere zwischen der Startposition (22) und der Endposition (28), umfasst.

6. Vorrichtung (10) nach einem der voranstehenden Ansprüche, **dadurch gekennzeichnet, dass** jede Haltesegmenteinheit (20) mehrere Aufnahmen (42) zur Aufnahme von Schenkeln (16) eines Leiterstücks (14) aufweist, insbesondere wobei die Haltesegmenteinheit (20) kammartig ausgebildet ist, wobei jede Aufnahme (42) zwischen zwei benachbarten Kammzinken (44) angeordnet ist.

7. Vorrichtung (10) nach Anspruch 6, **dadurch gekennzeichnet, dass** jede Haltesegmenteinheit (20) mindestens eine Führungskante (46) aufweist, wobei die Führungskante (46) eingerichtet ist, um während der Bestückung der Haltesegmenteinheit (20) die in die Haltesegmenteinheit (20) einzusetzenden Leiterstücke (14) zumindest teilweise zu führen und zu zentrieren, insbesondere wobei die Führungskante (46) entlang eines Kammzinkens (44) und zwischen zwei benachbarten Kammzinken (44) angeordnet ist.

8. Vorrichtung (10) nach einem der voranstehenden Ansprüche, **dadurch gekennzeichnet, dass** jede Haltesegmenteinheit (20) einen ersten Überlappungsbereich (48) und einen zweiten Überlappungsbereich (50) aufweist, wobei die Haltesegmenteinheiten (20) in der Endkonfiguration (12) derart angeordnet sind, dass der erste Überlappungsbereich (48) einer ersten Haltesegmenteinheit (20) mit dem zweiten Überlappungsbereich (50) einer benachbarten zweiten Haltesegmenteinheit (20) überlappt, insbesondere wobei der erste Überlappungsbereich (48) an einen ersten Absatz (52) der Haltesegmenteinheit (20) und/oder der zweite Überlappungsbereich (50) an einen zweiten Absatz (54) der Haltesegmenteinheit (20) angrenzt.

9. Vorrichtung (10) nach einem der voranstehenden Ansprüche, **dadurch gekennzeichnet, dass** die Vorrichtung mindestens eine fest angeordnete Sonderhaltesegmenteinheit aufweist, die unbeweglich in der Endposition (28) auf der zweiten Kreisbahn (30) um den Mittelpunkt (24) angeordnet ist.

10. Maschine (56) umfassend mindestens eine Vorrichtung (10) nach einem der voranstehenden Ansprüche, **dadurch gekennzeichnet, dass** die Maschine (10) mindestens eine Bestückeinrichtung (58) zur Bestückung der Haltesegmenteinheiten (20) der Vorrichtung (10) in der Startposition (22) mit Leiterstücken (14) umfasst, wobei die Bestückeinrichtung (58) insbesondere greiferbasiert ausgebildet ist.

11. Maschine (56) nach Anspruch 10, **dadurch gekennzeichnet, dass** die Maschine (56) mindestens zwei Vorrichtungen (10) nach einem der voranstehenden Ansprüche umfasst, wobei die Vorrichtungen (10) eingerichtet sind, um die in der jeweiligen Vorrichtung (10) eingesetzten Leiterstücke (14) jeweils in unterschiedliche Endkonfigurationen (12) zu überführen, insbesondere wobei die unterschiedlichen Endkonfigurationen (12) der Leiterstücke (14) einen unterschiedlichen Durchmesser aufweisen.

12. Verfahren zur Erzeugung einer insbesondere kreisförmigen Endkonfiguration (12) von Leiterstücken (14), vorzugsweise Hairpins, die insbesondere mit rechteckigem Leiterquerschnitt ausgebildet sind, zur Bestückung eines Statorkerns, wobei jedes Leiterstück (14) mindestens einen, insbesondere zwei, Schenkel (16) aufweist, wobei das Verfahren die Schritte umfasst:
- Anordnen der Leiterstücke (14) in einer Startposition (60) in, insbesondere bogenförmigen, Leiterstücksegmenten (62), wobei die Leiterstücksegmente (62) in einem jeweiligen ersten radialen Abstand zu einem Mittelpunkt (24), insbesondere auf einer ersten Kreisbahn (26) um den Mittelpunkt (24), angeordnet sind, wobei jedes Leiterstücksegment (62) in einer Haltesegmenteinheit (20) aufgenommen ist, wobei alle Schenkel (16) eines in der Haltesegmenteinheit (20) aufgenommenen Leiterstücksegments (62) in der Haltesegmenteinheit (20) aufgenommen sind;
- Zeitlich versetztes und/oder gleichzeitiges Bewegen der Leiterstücksegmente (62) aus der Startposition (60) radial einwärts in eine Endposition (64), wobei die Leiterstücksegmente (62) in der Endposition (64) in der Endkonfiguration (12) angeordnet sind;
- wobei die Leiterstücksegmente (62) von der Startposition (60) in die Endposition (64) auf einer zumindest teilweise geradlinigen Bewegungsbahn bewegt werden.

13. Verfahren nach Anspruch 12, **dadurch gekennzeichnet, dass** die Leiterstücksegmente (62) von der Startposition (60) in die Endposition (64) ausschließlich geradlinig translatorisch bewegt werden.

14. Verfahren nach Anspruch 12 oder 13, **dadurch gekennzeichnet, dass** die Leiterstücksegmente (62) jeweils auf einer Bewegungsbahn (32) zwischen der Startposition (60) und der Endposition (64) bewegt werden, wobei die Bewegungsbahnen (32) der Leiterstücksegmente (62) tangential zu einer dritten Kreisbahn (34) um den Mittelpunkt (24) oder durch den Mittelpunkt (24) verlaufen.

15. Verfahren nach Anspruch 12 bis 14, **dadurch gekennzeichnet, dass** das Verfahren den Schritt umfasst:
- Anordnen der Leiterstücke (14) in einer Endposition (64) in mindestens einem, insbesondere bogenförmigen, unbeweglichen Leiterstücksegment.

16. Verfahren nach einem der Ansprüche Anspruch 12 bis 15, **dadurch gekennzeichnet, dass** zur Durchführung des Verfahrens eine Vorrichtung (10) nach einem der Ansprüche 1 bis 9 oder eine Maschine (56) nach Anspruch 10 oder 11 verwendet wird.

## Claims

1. An apparatus (10) for producing an in particular circular final configuration (12) of conductor elements (14), preferably hairpins, which are designed in particular with a rectangular conductor cross-section, for fitting a stator core, wherein each conductor element (14) has at least one, in particular two, limbs (16), wherein the apparatus (10) comprises:
- at least two holding segment devices (18), wherein each holding segment device (18) has at least one holding segment unit (20) configured to receive the limbs (16) of multiple conductor elements (14) and to hold them in a provided orientation and to transfer them into the final configuration (12) by moving the holding segment unit (20),
- wherein all limbs of a conductor element (14) received in the holding segment unit (20) are received in the holding segment unit (20),
- wherein the holding segment units (20) are arranged in a starting position (22) at a particular first radial distance from a center point (24), in particular on a first circular path (26) around the center point (24),
- wherein the holding segment units (20) are arranged in a final position (28) on a second circular path (30) around the center point (24),
- wherein at least one, in particular multiple, in particular each, holding segment unit (20) is designed to be movable in the apparatus (10) along an at least partially straight movement path (32) between the starting position (22) and the final position (28), in order to move the conductor elements (14) received therein from the starting position (22) into the final position (28),
- wherein the movement paths (32) of the holding segment units (20) run tangentially to a third circular path (34) around the center point (24) or through the center point.

2. The apparatus according to claim 1, **characterized in that** each holding segment unit (20) is designed to be movable in the apparatus (10) along a straight movement path (32) between the starting position (22) and the final position (28), in order to move the conductor elements (14) received therein from the starting position (22) into the final position (28) by means of an exclusively straight, translational movement.

3. The apparatus (10) according to claim 1 or claim 2, **characterized in that** each holding segment device (18) comprises a first guide element (36) and a second guide element (38), the particular holding segment unit (20) being arranged in the starting position (22) between the first guide element (36) and the second guide element (38), the first and the second guide element (36, 38) being configured such that the conductor elements (14) are guided at least partially through the guide elements (36, 38) during the fitting of the particular holding segment unit (20) in the starting position (22).

4. The apparatus (10) according to claim 3, **characterized in that** the second guide element (38) is arranged on the side of the holding segment unit (20) that faces the center point (24), and is movable, in particular pivotable, in such a way that it can be moved between a fitting position in which it fixes the holding segment unit (20) and forms a guide for conductor elements to be fitted, into a release position in which it allows a movement of the holding segment unit (20) into its final position (28).

5. The apparatus (10) according to any of the preceding claims,
**characterized in that** each holding segment device (18) comprises at least one guide device, in particular in the form of a guide rail (40), for the guided movement of the holding segment unit (20) along the movement path (32), in particular between the starting position (22) and the final position (28).

6. The apparatus (10) according to any of the preceding claims,
**characterized in that** each holding segment unit (20) has multiple receptacles (42) for receiving limbs (16) of a conductor element (14), in particular the holding segment unit (20) being comb-like in design, each receptacle (42) being arranged between two adjacent comb teeth (44).

7. The apparatus (10) according to claim 6, **characterized in that** each holding segment unit (20) has at least one guide edge (46), the guide edge (46) being configured to at least partially guide and center the conductor elements (14) to be inserted into the holding segment unit (20) during the fitting of the holding segment unit (20), in particular the guide edge (46) being arranged along a comb tooth (44) and between two adjacent comb teeth (44).

8. The apparatus (10) according to any of the preceding claims,
**characterized in that** each holding segment unit (20) has a first overlap region (48) and a second overlap region (50), the holding segment units (20) being arranged in the final configuration (12) such that the first overlap region (48) of a first holding segment unit (20) overlaps with the second overlap region (50) of an adjacent second holding segment unit (20), in particular the first overlap region (48) adjoining a first shoulder (52) of the holding segment unit (20) and/or the second overlap region (50) adjoining a second shoulder (54) of the holding segment unit (20).

9. The apparatus (10) according to any of the preceding claims,
**characterized in that** the apparatus has at least one fixedly arranged special holding segment unit which is arranged immovably in the final position (28) on the second circular path (30) around the center point (24).

10. A machine (56) comprising at least one apparatus (10) according to any of the preceding claims, **characterized in that** the machine (10) comprises at least one fitting device (58) for fitting the holding segment units (20) of the apparatus (10) in the starting position (22) with conductor elements (14), the fitting device (58) being designed in particular based on a gripper.

11. The machine (56) according to claim 10, **characterized in that** the machine (56) comprises at least two apparatuses (10) according to any of the preceding claims, the apparatuses (10) being configured to transfer the conductor elements (14) inserted in the particular apparatus (10) into different final configurations (12), in particular the different final configurations (12) of the conductor elements (14) having a different diameter.

12. A method for producing an in particular circular final configuration (12) of conductor elements (14), preferably hairpins, which are designed in particular with a rectangular conductor cross-section, for fitting a stator core, wherein each conductor element (14) has at least one, in particular two, limbs (16), wherein the method comprises the steps of:
- arranging the conductor elements (14) in a starting position (60) in, in particular arcuate, conductor element segments (62), wherein the conductor element segments (62) are arranged at a particular first radial distance from a center point (24), in particular on a first circular path (26) around the center point (24), wherein each conductor element segment (62) is received in a holding segment unit (20), wherein all limbs (16) of a conductor element segment (62) received in the holding segment unit (20) are received in the holding segment unit (20);
- asynchronously and/or simultaneously moving the conductor element segments (62) out of the starting position (60) radially inward into a final position (64), wherein the conductor element segments (62) are arranged in the final position (64) in the final configuration (12);
- wherein the conductor element segments (62) are moved from the starting position (60) into the final position (64) on a movement path that is at least partially straight.

13. The method according to claim 12, **characterized in that** the conductor element segments (62) are moved translationally from the starting position (60) into the final position (64) exclusively in a straight line.

14. The method according to claim 12 or 13, **characterized in that** the conductor element segments (62) are each moved on a movement path (32) between the starting position (60) and the final position (64), the movement paths (32) of the conductor element segments (62) running tangentially to a third circular path (34) around the center point (24) or through the center point (24).

15. The method according to claim 12 to 14, **characterized in that** the method comprises the step of:
- arranging the conductor elements (14) in a final position (64) in at least one, in particular arcuate, immovable conductor element segment.

16. The method according to any of claims 12 to 15, **characterized in that** an apparatus (10) according to any of claims 1 to 9 or a machine (56) according to claim 10 or 11 is used to carry out the method.

## Revendications

1. Dispositif (10) pour la génération d'une configuration finale (12) notamment circulaire d'éléments conducteurs (14), de préférence des épingles à cheveux, formés notamment avec une section de conducteur rectangulaire, pour le montage d'un noyau de stator, chaque élément conducteur (14) comportant au moins un, en particulier deux, brins (16), le dispositif (10) comprenant :
- au moins deux dispositifs de maintien de segments (18), chaque dispositif de maintien de segments (18) comprenant au moins une unité de segment de maintien (20) configurée pour recevoir les brins (16) de plusieurs éléments conducteurs (14) et les maintenir dans une orientation prévue et, par le mouvement de l'unité de segment de maintien (20), les amener dans la configuration finale (12),
- où tous les brins d'un élément conducteur (14) reçu dans l'unité de segment de maintien (20) sont reçus dans ladite unité de segment de maintien (20),
- où les unités de segment de maintien (20) sont disposées dans une position de départ (22) à une première distance radiale respective d'un centre (24), notamment sur une première trajectoire circulaire (26) autour du centre (24),
- où les unités de segment de maintien (20) sont disposées en position finale (28) sur une seconde trajectoire circulaire (30) autour du centre (24),
- où au moins une, en particulier plusieurs, voire chaque unité de segment de maintien (20) est aménagée pour être mobile le long d'une trajectoire de mouvement (32) au moins partiellement rectiligne entre la position de départ (22) et la position finale (28) dans le dispositif (10), afin de déplacer les éléments conducteurs (14) qu'elle reçoit de la position de départ (22) à la position finale (28),
- où les trajectoires de mouvement (32) des unités de segment de maintien (20) sont tangentes à une troisième trajectoire circulaire (34) autour du centre (24) ou passent par le centre.

2. Dispositif selon la revendication 1, **caractérisé en ce que** chaque unité de segment de maintien (20) est conçue pour être mobile le long d'une trajectoire de mouvement (32) rectiligne entre la position de départ (22) et la position finale (28) dans le dispositif (10), afin de déplacer les éléments conducteurs (14) qu'elle reçoit de la position de départ (22) à la position finale (28) par un mouvement translationnel exclusivement rectiligne.

3. Dispositif (10) selon la revendication 1 ou 2, **caractérisé en ce que** chaque dispositif de maintien de segments (18) comprend un premier élément de guidage (36) et un second élément de guidage (38), la respective unité de segment de maintien (20) étant disposée en position de départ (22) entre le premier élément de guidage (36) et le second élément de guidage (38), le premier et le second élément de guidage (36, 38) étant configurés de telle sorte que les éléments conducteurs (14), lors du montage de la respective unité de segment de maintien (20) en position de départ (22), soient au moins partiellement guidés par les éléments de guidage (36, 38).

4. Dispositif (10) selon la revendication 3, **caractérisé en ce que** le second élément de guidage (38) est disposé sur le côté de l'unité de segment de maintien (20) faisant face au centre (24) et est mobile de telle sorte, notamment pivotant, qu'il puisse passer d'une position de montage, dans laquelle il fixe l'unité de segment de maintien (20) et constitue un guidage pour les éléments conducteurs à monter, à une position de libération, dans laquelle il permet le déplacement de l'unité de segment de maintien (20) vers sa position finale (28).

5. Dispositif (10) selon l'une quelconque des revendications précédentes, **caractérisé en ce que** chaque dispositif de maintien de segments (18) comprend au moins un dispositif de guidage, en particulier sous la forme d'un rail de guidage (40), pour le déplacement guidé de l'unité de segment de maintien (20) le long de la trajectoire de mouvement (32), notamment entre la position de départ (22) et la position finale (28).

6. Dispositif (10) selon l'une quelconque des revendications précédentes, **caractérisé en ce que** chaque unité de segment de maintien (20) comporte plusieurs logements (42) destinés à recevoir des brins (16) d'un élément conducteur (14), l'unité de segment de maintien étant notamment conçue en forme de peigne, chaque logement (42) étant disposé entre deux dents de peigne (44) adjacentes.

7. Dispositif (10) selon la revendication 6, **caractérisé en ce que** chaque unité de segment de maintien (20) comporte au moins une arête de guidage (46), l'arête de guidage (46) étant prévue pour guider et centrer au moins partiellement, lors du montage de l'unité de segment de maintien (20), les éléments conducteurs (14) à insérer dans l'unité de segment de maintien (20), l'arête de guidage (46) étant notamment disposée le long d'une dent de peigne (44) et entre deux dents de peigne (44) adjacentes.

8. Dispositif (10) selon l'une quelconque des revendications précédentes, **caractérisé en ce que** chaque unité de segment de maintien (20) comporte une première zone de recouvrement (48) et une deuxième zone de recouvrement (50), les unités de segment de maintien (20) étant disposées dans la configuration finale (12) de sorte que la première zone de recouvrement (48) d'une première unité de segment de maintien (20) chevauche la deuxième zone de recouvrement (50) d'une deuxième unité de segment de maintien (20) voisine, notamment la première zone de recouvrement (48) bordant un premier ressaut (52) de l'unité de segment de maintien (20) et/ou la deuxième zone de recouvrement (50) bordant un second ressaut (54) de l'unité de segment de maintien (20).

9. Dispositif (10) selon l'une quelconque des revendications précédentes, **caractérisé en ce que** le dispositif comprend au moins une unité spéciale de segment de maintien fixée, immobile, disposée en position finale (28) sur la deuxième trajectoire circulaire (30) autour du centre (24).

10. Machine (56) comprenant au moins un dispositif (10) selon l'une quelconque des revendications précédentes, **caractérisée en ce que** la machine (56) comprend au moins un dispositif de montage (58) pour monter des éléments conducteurs (14) dans les unités de segment de maintien (20) du dispositif (10) en position de départ (22), le dispositif de montage (58) étant notamment conçu sur la base d'un préhenseur.

11. Machine (56) selon la revendication 10, **caractérisée en ce que** la machine (56) comprend au moins deux dispositifs (10) selon l'une quelconque des revendications précédentes, les dispositifs (10) étant conçus pour amener les éléments conducteurs (14) utilisés dans le dispositif (10) respectif dans des configurations finales (12) différentes, les différentes configurations finales (12) des éléments conducteurs (14) présentant notamment des diamètres différents.

12. Procédé pour produire une configuration finale (12) notamment circulaire d'éléments conducteurs (14), de préférence des épingles à cheveux, qui sont notamment formés avec une section du conducteur rectangulaire, pour le montage d'un noyau de stator, chaque élément conducteur (14) comprenant au moins un, de préférence deux, brins (16), le procédé comprenant les étapes suivantes :
- Disposition des éléments conducteurs (14) en une position de départ (60) dans des segments d'éléments conducteurs (62) notamment en forme d'arc, les segments d'éléments conducteurs (62) étant disposés à une distance radiale respective première d'un centre (24), notamment sur une première trajectoire circulaire (26) autour du centre (24), chaque segment d'élément conducteur (62) étant reçu dans une unité de segment de maintien (20), tous les brins (16) d'un segment d'élément conducteur (62) reçu dans l'unité de segment de maintien (20) étant accueillis dans l'unité de segment de maintien (20) ;
- Déplacement décalé dans le temps et/ou simultané des segments d'éléments conducteurs (62) depuis la position de départ (60) radialement vers l'intérieur vers une position finale (64), les segments d'éléments conducteurs (62) étant en position finale (64) disposés dans la configuration finale (12) ;
- où les segments d'éléments conducteurs (62) sont déplacés de la position de départ (60) à la position finale (64) sur une trajectoire de mouvement au moins partiellement rectiligne.

13. Procédé selon la revendication 12, **caractérisé en ce que** les segments d'éléments conducteurs (62) sont déplacés de la position de départ (60) à la position finale (64) exclusivement par translation rectiligne.

14. Procédé selon la revendication 12 ou 13, **caractérisé en ce que** les segments d'éléments conducteurs (62) sont chacun déplacés le long d'une trajectoire de mouvement (32) entre la position de départ (60) et la position finale (64), les trajectoires de mouvement (32) des segments d'éléments conducteurs (62) étant tangentes à une troisième trajectoire circulaire (34) autour du centre (24) ou passant par le centre (24).

15. Procédé selon l'une quelconque des revendications 12 à 14, **caractérisé en ce que** le procédé comprend l'étape consistant à :
- Disposer les éléments conducteurs (14) dans une position finale (64) au sein d'au moins un segment d'élément conducteur immobile, en particulier arqué.

16. Procédé selon l'une quelconque des revendications 12 à 15, **caractérisé en ce que**, pour la mise en œuvre du procédé, on utilise un dispositif (10) selon l'une quelconque des revendications 1 à 9 ou une machine (56) selon la revendication 10 ou 11.
